# FASCICULE DE BREVET EUROPEEN

(11) **EP 1 008 502 B1**
(45) Date de publication et mention de la délivrance du brevet: **25.06.2003**
(21) Numéro de dépôt: 99402686.2
(22) Date de dépôt: 28.10.1999
(51) Int. Cl.: B60T 7/10

(54) **Dispositif de secours pour frein électrique de stationnement de véhicule automobile**
Notbetätigungsvorrichtung für eine elektrische Kraftfahrzeugfeststellbremse
Emergency operation device for an electric motor vehicle parking brake

(30) Priorité: 10.12.1998 FR 9815607
(43) Date de publication de la demande: 14.06.2000
(73) Titulaire: AUTOMOBILES PEUGEOT, 75116 Paris (FR); AUTOMOBILES CITROEN, 92200 Neuilly-sur-Seine (FR)
(72) Inventeur: Goly, Fabrice, 95610 Eragny sur Oise (FR)
(74) Mandataire: Thinat, Michel

(56) Documents cités:
- WO-A-97/44221
- DE-A- 4 129 934
- FR-A- 2 691 934
- US-A- 4 818 008
- US-A- 4 864 886

## Description

La présente invention concerne un dispositif de secours pour frein électrique de stationnement de véhicule automobile.

On connaît un frein électrique de stationnement de véhicule automobile comprenant un boîtier dans lequel est logé un ensemble motoréducteur électrique et qui est monté à proximité de la traverse arrière du véhicule. Cet ensemble peut être commandé à distance pour provoquer, par l'intermédiaire de câbles, un serrage ou un desserrage des organes de freinage du véhicule.

Le frein électrique est en outre muni d'une tirette d'extraction manuelle permettant un desserrage de secours des organes de freinage en cas de panne du système électrique.

Cependant, du fait que le boîtier de logement de l'ensemble motoréducteur électrique est situé à proximité de la traverse arrière du véhicule, la tirette d'extraction manuelle n'est pas d'accès facile pour l'utilisateur. De plus, cette tirette a pour fonction de faire rentrer la gaine correspondante de guidage d'un câble d'actionnement des organes de freinage à l'intérieur du boîtier pour permettre le desserrage de secours. Cet agencement a pour inconvénient d'enlever un arrêt de la gaine, rendant peu commode la remise en place de la gaine en appui sur la paroi correspondante du boîtier.

La présente invention a pour but d'éliminer les inconvénients ci-dessus des dispositifs de secours antérieurement connus.

A cet effet, selon l'invention, le dispositif de secours pour frein électrique de stationnement de véhicule automobile, où le frein électrique comprend un ensemble motoréducteur électrique logé dans un boîtier et pouvant être commandé à distance pour provoquer, par l'intermédiaire de câbles, un serrage ou un desserrage des organes de freinage, est caractérisé en ce que le boîtier dans lequel est logé l'ensemble motoréducteur électrique est situé à proximité du siège du conducteur et l'ensemble motoréducteur est accessible par une trappe pour permettre l'entraînement manuel, par un mécanisme approprié, du motoréducteur afin de commander le déplacement des câbles dans le sens du serrage ou du desserrage des organes de freinage.

Selon un mode de réalisation, le mécanisme d'entraînement manuel du motoréducteur comprend une manivelle permettant d'entraîner l'arbre du moteur électrique de l'ensemble motoréducteur.

La manivelle est fixée en permanence à l'arbre du moteur électrique.

Selon une variante, la manivelle est séparable de l'arbre du moteur électrique.

Selon un autre mode de réalisation, le mécanisme d'entraînement manuel du motoréducteur comprend une clé à douille à mouvement de rotation réversible engagée en bout de l'arbre du moteur électrique de l'ensemble motoréducteur.

La clé à douille est fixée en permanence à l'arbre du moteur électrique.

Selon une variante, la clé à douille est séparable de l'arbre du moteur électrique.

Le boîtier dans lequel est logé l'ensemble motoréducteur électrique est disposé sous une boîte à gants située entre les deux sièges avant du véhicule.

La trappe d'accès à l'ensemble motoréducteur est située au fond de la boîte à gants.

Selon une variante, la trappe d'accès à l'ensemble motoréducteur est située sur une console voisine de la boîte à gants.

L'invention sera mieux comprise et d'autres buts, caractéristiques, détails et avantages de celle-ci apparaîtront plus clairement dans la description explicative qui va suivre faite en référence aux dessins schématiques annexés donnés uniquement à titre d'exemple illustrant deux modes de réalisation de l'invention et dans lesquels.

La figure 1 est une vue en coupe partielle et élévation longitudinale d'un mode de réalisation du dispositif de secours de l'invention pour un frein électrique de stationnement de véhicule automobile.

La figure 2 est une vue en coupe partielle et élévation longitudinale d'un autre mode de réalisation du dispositif de secours selon l'invention du frein de stationnement du véhicule automobile.

La figure 3 est une vue de dessus suivant la flèche III de la figure 2.

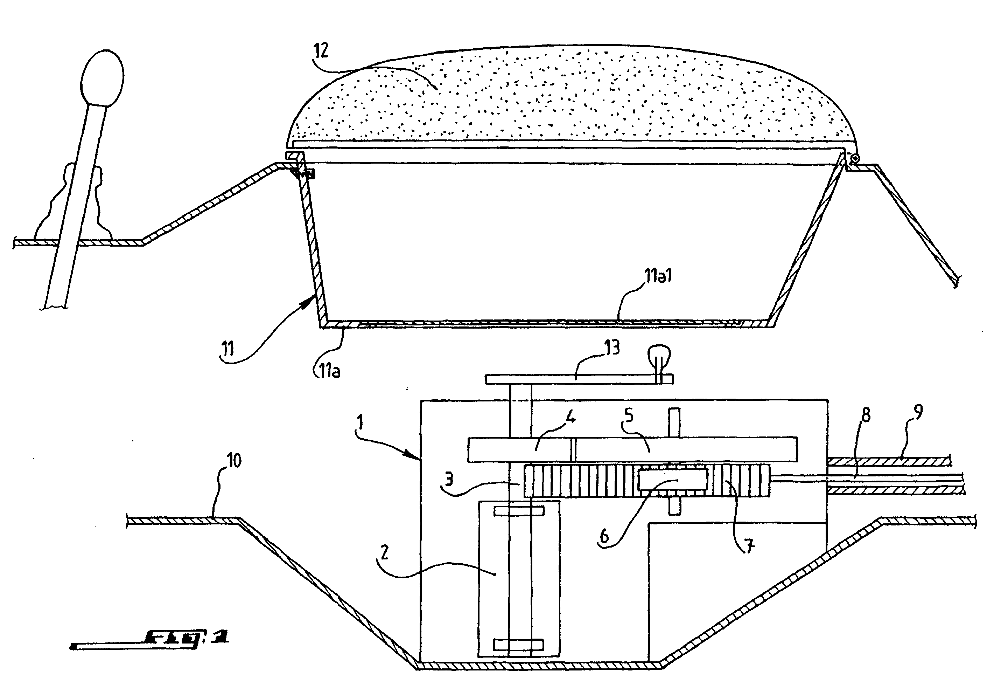

En se reportant à la figure 1, le frein électrique de stationnement de véhicule automobile comprend un boîtier 1 qui contient un ensemble motoréducteur électrique constitué d'un moteur électrique 2 dont l'arbre moteur 3 entraîne en translation rectiligne, par l'intermédiaire d'un réducteur à trois pignons 4, 5, 6, une crémaillère 7 pour provoquer le déplacement de deux câbles 8, dont un seul est représenté, d'actionnement des organes de freinage du véhicule (non représentés). Chaque câble 8 traverse la paroi latérale correspondante du boîtier 1 et est logé, à l'extérieur de ce boîtier, dans une gaine de guidage 9 en appui sur cette paroi latérale. Chaque câble 8 est fixé à l'extrémité libre correspondante de la crémaillère 7.

Le moteur électrique 2 peut être actionné à distance par exemple à partir d'un bouton de commande manuel (non représenté) situé, par exemple, au tableau de bord du véhicule. Ce bouton possède deux positions actives d'entraînement du moteur électrique 2 dans un sens donné ou en sens inverse de façon à déplacer les câbles 8 dans le sens du serrage ou du desserrage des organes de freinage.

L'ensemble motoréducteur électrique ci-dessus décrit peut être remplacé par tout autre ensemble motoréducteur électrique connu.

Selon l'invention, le boîtier 1 dans lequel est logé l'ensemble motoréducteur est situé à proximité du siège conducteur.

Dans le mode de réalisation décrit ci-après, cet ensemble motoréducteur est fixé au tunnel longitudinal 10 du véhicule sous une boîte à gants 11 à accoudoir articulé 12 formant couvercle de fermeture de la boîte à gants 11 située entre les deux sièges avant du véhicule.

Un mécanisme est prévu pour permettre à un utilisateur d'entraîner manuellement l'arbre 3 du moteur électrique 2 en cas de panne du système électrique de commande du frein électrique de façon à déplacer la crémaillère 7 dans un sens ou dans l'autre pour serrer ou desserrer les organes de freinage.

Ce mécanisme comprend une manivelle 13 pouvant être fixée en bout de l'arbre moteur 3 à l'extérieur du boîtier 1, l'arbre 3 occupant une position verticale, et la manivelle 13 peut être soit fixée en permanence à l'arbre moteur 3, soit séparable de celui-ci après utilisation. En tout cas, la manivelle 13 est située pratiquement juste en dessous du fond 11a de la boîte à gants 11 et qui peut comporter une trappe liai fixée amoviblement ou de façon articulée au fond 11a pour dégager une ouverture d'accès à la manivelle de manoeuvre 13. Selon une variante, la boîte à gants peut être entièrement amovible pour accéder à la manivelle 13.

Ainsi, lors d'une défaillance de la commande électrique du frein secondaire, l'utilisateur peut accéder à la manivelle 13 ou placer celle-ci en bout de l'arbre moteur 3 pour serrer ou desserrer le frein secondaire, le temps de serrage ou de desserrage, bien que relativement important du fait de la présence du réducteur à pignons 4-6, étant acceptable dans ce genre de situation qui se produit très rarement.

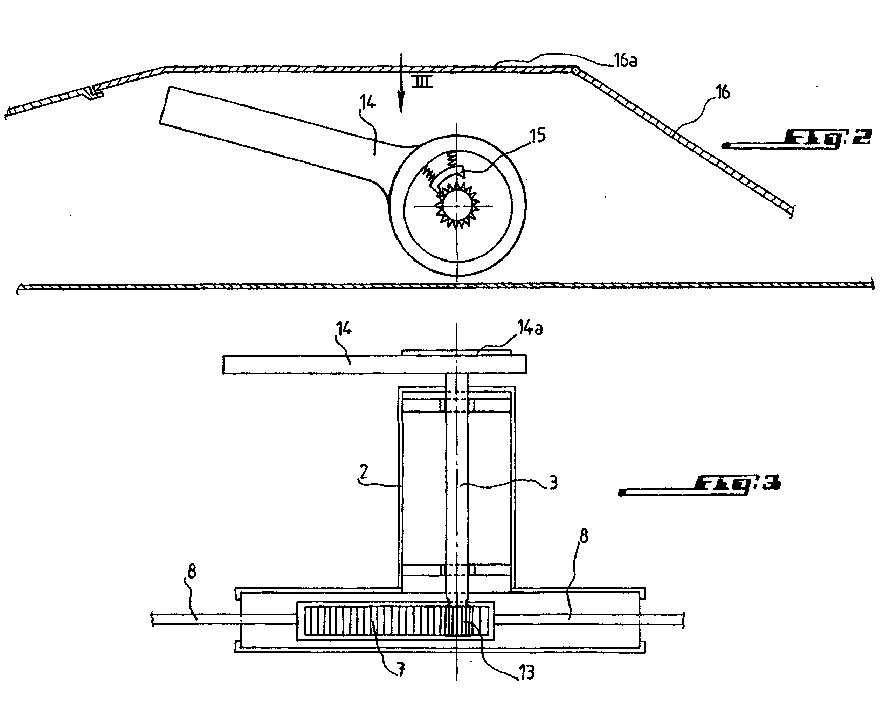

Selon le mode de réalisation représenté aux figures 2 et 3, où le moteur électrique 2 de l'ensemble motoréducteur électrique du frein secondaire est monté horizontalement, le mécanisme d'entraînement de l'arbre moteur 3, comportant à une extrémité un pignon denté 13 taillé directement dans celle-ci et en engrènement avec la crémaillère 7 de déplacement des deux câbles de frein 8, est constitué par une clé à douille 14 à cliquet réversible 15, dont la douille s'engage en bout de l'arbre moteur 3 opposé à son extrémité dentée 13 de façon à permettre à l'utilisateur d'entraîner en rotation dans un sens ou dans l'autre l'arbre moteur 3 et à ainsi déplacer les câbles 8 dans le sens du serrage ou du desserrage des organes de freinage. La clé à douille 14 est connue en soi notamment dans le domaine de serrage ou de desserrage de vis de fixation et n'a pas besoin d'être détaillée sinon qu'elle comporte un bouton rotatif de manoeuvre 14a permettant de changer le sens d'entraînement positif de l'arbre moteur 3. La clé à douille 14 peut être fixée en permanence à l'arbre moteur 3 à l'extérieur du boîtier contenant le moteur 2 ou être séparable de celui-ci. Bien entendu, l'arbre 3 peut être relié à la crémaillère 7 par un réducteur du genre représenté en figure 1.

Selon une variante de réalisation, l'accès à l'ensemble motoréducteur du frein électrique peut s'effectuer par une trappe 16a de la console 16 au voisinage de la boîte à gants en avant de celle-ci dans la mesure où l'arbre moteur 3 irait au-delà de la boîte à gants vers l'avant du véhicule. Comme représenté, la trappe 16a est montée pivotante d'un côté à la console 16, mais peut être tout simplement amovible.

Le dispositif de secours pour frein électrique de stationnement de véhicule automobile conforme à l'invention est très facile d'accès et permet à l'utilisateur de manoeuvrer les câbles de desserrage des organes de freinage sans effort particulier du fait de la présence du réducteur de l'ensemble motoréducteur électrique.

## Revendications

1. Dispositif de secours pour frein électrique de stationnement de véhicule automobile, le frein électrique comprenant un ensemble motoréducteur électrique logé dans un boîtier (1) et pouvant être commandé à distance pour provoquer, par l'intermédiaire de câbles (8), un serrage ou un desserrage des organes de freinage, **caractérisé en ce que** le boîtier (1) dans lequel est logé l'ensemble motoréducteur électrique situé à proximité du siège du conducteur et l'ensemble motoréducteur (2, 4-6) est accessible par une trappe pour permettre l'entraînement manuel, par un mécanisme approprié (13, 14), du motoréducteur afin de commander le déplacement des câbles (8) dans le sens du serrage ou du desserrage des organes de freinage.

2. Dispositif selon la revendication 1, **caractérisé en ce que** le mécanisme d'entraînement manuel du motoréducteur comprend une manivelle (13) permettant d'entraîner l'arbre (3) du moteur électrique (2) de l'ensemble motoréducteur.

3. Dispositif selon la revendication 2, **caractérisé en ce que** la manivelle (13) est fixée en permanence à l'arbre (3) du moteur électrique (2).

4. Dispositif selon la revendication 2, **caractérisé en ce que** la manivelle (13) est séparable de l'arbre (3) du moteur électrique (2).

5. Dispositif selon la revendication 1, **caractérisé en ce que** le mécanisme d'entraînement manuel du motoréducteur comprend une clé à douille (4) à mouvement de rotation réversible engagée en bout de l'arbre (3) du moteur électrique (2) de l'ensemble motoréducteur.

6. Dispositif selon la revendication 5, **caractérisé en ce que** la clé à douille (4) est fixée en permanence à l'arbre (3) du moteur électrique.

7. Dispositif selon la revendication 5, **caractérisé en ce que** la clé à douille (4) est séparable de l'arbre (3) du moteur électrique (8).

8. Dispositif selon l'une quelconque des revendications précédentes, **caractérisé en ce que** le boîtier (1) dans lequel est logé l'ensemble motoréducteur électrique est disposé sous une boîte à gants (11) située entre les deux sièges avant du véhicule.

9. Dispositif selon la revendication 8, **caractérisé en ce que** la trappe d'accès (liai) à l'ensemble motoréducteur est située au fond (11a) de la boîte à gants (11).

10. Dispositif selon l'une des revendications 1 à 7, **caractérisé en ce que** la trappe d'accès (16a) à l'ensemble motoréducteur est située sur une console (16) voisine de la boîte à gants (11).

## Patentansprüche

1. Notbetätigungsvorrichtung für eine elektrische Kraftfahrzeugfeststellbremse, wobei die elektrische Bremse eine elektrische Getriebemotoreinheit enthält, die in einem Gehäuse (1) untergebracht und fernsteuerbar ist, um mittels Kabeln (8) ein Anziehen bzw. Lösen der Bremsglieder zu bewirken, **dadurch gekennzeichnet, dass** das Gehäuse (1), in welchem die elektrische Getriebemotoreinheit untergebracht ist, sich nahe dem Fahrersitz befindet und die Getriebemotoreinheit (2, 4 - 6) über eine Klappe zugänglich ist, um über einen geeigneten Mechanismus (13, 14) den manuellen Antrieb des Getriebemotors zu gestatten, um die Verstellung der Kabel (8) im Sinne eines Anziehens bzw. Lösens der Bremsglieder zu steuern.

2. Vorrichtung nach Anspruch 1, **dadurch gekennzeichnet, dass** der Mechanismus zum manuellen Antrieb des Getriebemotors eine Kurbel (13) enthält, mit der die Welle (3) des Elektromotors (2) der Getriebemotoreinheit angetrieben werden kann.

3. Vorrichtung nach Anspruch 2, **dadurch gekennzeichnet, dass** die Kurbel (13) ständig an der Welle (3) des Elektromotors (2) befestigt ist.

4. Vorrichtung nach Anspruch 2, **dadurch gekennzeichnet, dass** die Kurbel (13) von der Welle (3) des Elektromotors (2) trennbar ist.

5. Vorrichtung nach Anspruch 1, **dadurch gekennzeichnet, dass** der Mechanismus zum manuellen Antrieb des Getriebemotors einen Steckschlüssel (4) mit umkehrbarer Drehbewegung enthält, der am Ende der Welle (3) des Elektromotors (2) der Getriebemotoreinheit angreift.

6. Vorrichtung nach Anspruch 5, **dadurch gekennzeichnet, dass** der Steckschlüssel (4) ständig an der Welle (3) des Elektromotors befestigt ist.

7. Vorrichtung nach Anspruch 5, **dadurch gekennzeichnet, dass** der Steckschlüssel (4) von der Welle (3) des Elektromotors (8) trennbar ist.

8. Vorrichtung nach einem der vorangehenden Ansprüche, **dadurch gekennzeichnet, dass** das Gehäuse (1), in dem die elektrische Getriebemotoreinheit untergebracht ist, unter einem Handschuhfach (11) angeordnet ist, das sich zwischen den beiden Vordersitzen des Fahrzeugs befindet.

9. Vorrichtung nach Anspruch 8, **dadurch gekennzeichnet, dass** die Zugangsklappe (11a1) zur Getriebemotoreinheit sich am Boden (11a) des Handschuhfachs (11) befindet.

10. Vorrichtung nach einem der Ansprüche 1 bis 7, **dadurch gekennzeichnet, dass** die Zugangsklappe (16a) zur Getriebemotoreinheit sich auf einer dem Handschuhfach (11) benachbarten Konsole (16) befindet.

## Claims

1. Emergency operation device for an electric motor vehicle parking brake, the electric brake comprising an electric geared motor unit, housed in a casing (1), which can be remotely controlled to cause the application or release of the braking gear by means of cables (8), **characterised by** the fact that the casing (1) in which the electric geared motor unit is housed is situated near the driver's seat and the geared motor unit (2, 4-6) can be accessed through a hatch to allow manual drive of the geared motor by an appropriate mechanism (13, 14) in order to control the movement of the cables (8) in the direction of application or release of the braking gear.

2. Device according to claim 1, **characterised by** the fact that the mechanism for manual drive of the geared motor comprises a crank (13) allowing the shaft (3) of the electric motor (2) of the geared motor unit to be driven.

3. Device according to claim 2, **characterised by** the fact that the crank (13) is fixed permanently into the shaft (3) of the electric motor (2).

4. Device according to claim 2, **characterised by** the fact that the crank (13) can be separated from the shaft (3) of the electric motor (2).

5. Device according to claim 1, **characterised by** the fact that the mechanism for manual drive of the geared motor comprises a socket wrench (4) with reversible rotary movement engaged in the end of the shaft (3) of the electric motor (2) of the geared motor unit.

6. Device according to claim 5, **characterised by** the fact that the socket wrench (4) is permanently fixed to the shaft (3) of the electric motor.

7. Device according to claim 5, **characterised by** the fact that the socket wrench (4) can be separated from the shaft (3) of the electric motor (8). é

8. Device according to any one of the previous claims, **characterised by** the fact that the casing (1) in which the electric geared motor unit is housed is under a glove compartment (11) situated between the two front seats of the vehicle.

9. Device according to claim 8, **characterised by** the fact that the hatch (11a1) giving access to the geared motor unit is situated at the bottom (11a) of the glove compartment (11).

10. Device according to one of claims 1 to 7, **characterised by** the fact that the hatch (16a) giving access to the geared motor unit is situated on a console (16) near the glove compartment (11).
